# EUROPÄISCHE PATENTSCHRIFT

(11) **EP 2 919 325 B1**
(45) Veröffentlichungstag und Bekanntmachung des Hinweises auf die Patenterteilung: **22.02.2017**
(21) Anmeldenummer: 14305346.0
(22) Anmeldetag: 11.03.2014
(51) Int. Cl.: H01R 4/68, H02G 15/34, H01R 4/70

(54) **Endenabschluß für ein supraleitfähiges elektrisches Kabel**
End terminator for a supra-conducting electric cable
Terminaison de câble électrique résistant à une forte conduction

(43) Veröffentlichungstag der Anmeldung: 16.09.2015
(73) Patentinhaber: Nexans, 75008 Paris (FR)
(72) Erfinder: Marzahn, Erik, 30853 Langenhagen (DE); Stemmle, Mark, 30625 Hannover (DE)
(74) Vertreter: Hervouet-Malbec, Sylvie

(56) Entgegenhaltungen:
- WO-A1-2009/120553
- DE-U1-202004 007 187
- KR-A- 20100 092 106
- US-A1- 2011 319 269

## Beschreibung

Die Erfindung bezieht sich auf einen Endenabschluß für ein supraleitfähiges elektrisches Kabel, das mindestens einen supraleitfähigen Leiter aufweist, das von einem rohrförmigen, zur Führung eines Kühlmittels dienenden Kryostat umgeben ist und das an seinem Ende von einem Kühlmittel enthaltenden Gehäuse umgeben ist, durch welches eine mit dem Leiter verbundene Durchführung für dessen elektrischen Anschluß nach außen geführt ist (EP 1 617 537 B1).

Ein supraleitfähiges Kabel hat mindestens einen elektrischen Leiter aus einem Material, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke, die kritische Stromstärke, nicht überschritten wird. Geeignete Materialien sind beispielsweise oxidische Materialien auf Basis seltener Erden (ReBCO), insbesondere YBCO (Yttrium-Barium-Kupfer-Oxid) oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Ein anderes geeignetes Material ist beispielsweise Magnesiumdiborid, das bei Temperaturen von etwa 39 K oder niedriger in den supraleitfähigen Zustand übergeht. Geeignete Kühlmittel sind beispielsweise Stickstoff, Helium, Neon und Wasserstoff oder Gemische dieser Stoffe.

Beim Betrieb eines supraleitfähigen Kabels ist dasselbe in einem Kryostat angeordnet, durch welchen eines der erwähnten Kühlmittel geleitet wird. Ein Kryostat besteht aus mindestens einem thermisch isolierten Rohr. In bekannter Technik weist ein Kryostat beispielsweise zwei mit Abstand und konzentrisch zueinander angeordnete Rohre aus Metall auf, zwischen denen eine Vakuumisolierung angeordnet ist. Das Kabel ist am Ende einer Übertragungsstrecke in einen Endenabschluß geführt, an den auch der Kryostat angeschlossen ist. Der mindestens eine Leiter des supraleitfähigen Leiters ist im Endenabschluß weiter von dem Kühlmittel umspült. Er ist außerdem zur Herstellung einer elektrischen Verbindung mittels einer Durchführung aus dem Endenabschluß herausgeführt.

Der Endenabschluß nach der eingangs erwähnten EP 1 617 537 B1 weist ein an einen Kryostat angeschlossenes Gehäuse auf, welches das Ende des supraleitfähigen Leiters eines im Kryostat angeordneten Kabels umschließt. Der supraleitfähige Leiter ist an einen aus dem Gehäuse herausgeführten, von einer Isolierung umgebenen elektrischen Leiter angeschlossen, der von einem durch eine Vakuumisolierung isolierten Rohrstutzen umgeben ist, welcher mit dem Gehäuse verbunden ist. Über den Aufbau des Gehäuses ist in der Druckschrift nichts erwähnt.

DE 20 2004 007187 U1 offenbart einen Endabschluß gemäß dem Oberbegriff des Anspruchs 1.

Der Erfindung liegt die Aufgabe zugrunde, den eingangs erwähnten Endenabschluß so zu gestalten, daß er allen elektrischen und thermischen Anforderungen genügt.

Diese Aufgabe wird gemäß der Erfindung dadurch gelöst,
- daß das Gehäuse zwei durch einen Zwischenraum voneinander getrennte, aus Isoliermaterial bestehende Wandungen aufweist, in dessen Zwischenraum eine Gas enthaltende thermische Isolierung angebracht ist,
- daß der Druck in dem Zwischenraum des Gehäuses auf einen zwischen 10⁻⁹ mbar und 1000 mbar liegenden Wert eingestellt ist und
- daß an den Zwischenraum ein Druckmeßgerät und eine mit demselben verbundene Vakuumpumpe angeschlossen sind, welche zur Einstellung des im Zwischenraum des Gehäuses herrschenden Drucks auf einen vorgegebenen Wert dient.

Das Gehäuse dieses Endenabschlusses besteht aus elektrischen Gründen aus Isoliermaterial, beispielsweise aus einem glasfaserverstärkten Kunststoff. Die beiden Wandungen des Gehäuses sind mit Vorteil aus fertigungstechnischen Gründen aus mindestens zwei nebeneinander liegenden Teilen zusammengesetzt. Das Gehäuse ist außerdem über abgedichtete Verbindungselemente mit dem das supraleitfähige Kabel umgebenden Kryostat verbunden. Schließlich ist auch die Durchführung für den supraleitfähigen Leiter mit entsprechender Abdichtung durch die Wandungen des Gehäuses hindurchgeführt. Durch Undichtigkeiten der Dichtungen könnte an allen geschilderten Positionen Gas in den Zwischenraum des Gehäuses hineingelangen oder unter Umständen auch aus demselben austreten. Das gilt insbesondere auch für das den supraleitfähigen Leiter umgebende Kühlmittel, bei dem es sich beispielsweise um unter Druck stehenden, flüssigen Stickstoff handelt, der dann in den gasförmigen Zustand übergehen kann, wenn er aus dem Kühlraum bzw. aus der denselben begrenzenden inneren Wandung des Gehäuses austritt und in den Zwischenraum gelangt.

Der Zwischenraum des Gehäuses enthält eine auch elektrisch isolierende, thermische Isolierung, welche Gas enthält. Aus elektrischen Gründen sollte der Druck in dem Zwischenraum möglichst hoch sein, während er aus thermischen Gründen möglichst niedrig sein sollte. Unabhängig von dem tatsächlich im Zwischenraum herrschenden Druck würde derselbe durch in denselben eintretendes, gasförmiges Kühlmittel erhöht werden.

Zur Berücksichtigung der beiden, in obigem Sinne wünschenswerten unterschiedlichen Drücke ist in dem Zwischenraum des Gehäuses gemäß der Erfindung ein Druck eingestellt, der zwischen 10⁻⁹ mbar und 1000 mbar liegt. Er wird mit Vorteil auf etwa 400 mbar eingestellt. Dieser Druck wird durch die Vakuumpumpe bei einem vorgegebenen Wert gehalten wird. Dazu wird der Druck mittels eines an den Zwischenraum des Gehäuses angeschlossenen Druckmeßgeräts ständig gemessen und gegebenenfalls durch die Vakuumpumpe auf den vorgegebenen Wert eingestellt. In Abhängigkeit von der Dichtheit des Gehäuses einschließlich aller geschilderten Verbindungsstellen wird dazu die Vakuumpumpe in mehr oder weniger großen zeitlichen Abständen eingeschaltet.

In bevorzugter Ausführungsform des Endenabschlusses ist der Zwischenraum des Gehäuses mit einem Behälter verbunden, dessen Volumen groß ist im Verhältnis zu dem Volumen, welches das Gas im Zwischenraum des Gehäuses einnimmt. Der Behälter kann mit Vorteil zwischen dem Gehäuse des Endenabschlusses bzw. dem Zwischenraum desselben und der Vakuumpumpe angeordnet sein. Das Volumen des Behälters soll mit Vorteil mindestens um den Faktor "10" größer als das Volumen des im Zwischenraum des Gehäuses enthaltenen Gases sein. Durch den Behälter wird die Menge des bei dem angegebenen Druck zu haltenden Gases wesentlich vergrößert, ohne daß zusätzliche, möglicherweise undichte Stellen entstehen. Es ist dadurch erreicht, daß die Vakuumpumpe bei unverändertem Aufbau des Gehäuses nur noch in wesentlich größeren zeitlichen Abständen eingeschaltet wird.

Zwischen dem Gehäuse und der Vakuumpumpe bzw. zwischen dem Behälter und der Vakuumpumpe kann jeweils ein Ventil in eine verbindende Rohrleitung eingebaut sein, das nach dem jeweiligen Einschalten der Vakuumpumpe geöffnet wird.

Ausführungsbeispiele des Erfindungsgegenstandes sind in den Zeichnungen dargestellt.

Es zeigen:
Fig. 1 in schematischer Darstellung das Ende einer Übertragungsstrecke mit einem supraleitfähigen Kabel einschließlich eines Endenabschlusses.
Fig. 2 eine genauere, ebenfalls schematische Darstellung eines Endenabschlusses nach der Erfindung.
Fig. 3 eine gegenüber Fig. 2 ergänzte Ausführungsform des Endenabschlusses.

Der im Folgenden erwähnte Kryostat kann aus nur einem thermisch isolierten Rohr aus Metall, vorzugsweise aus Edelstahl, bestehen. Er kann aber auch zwei konzentrisch und mit Abstand zueinander angeordnete Rohre aus Metall aufweisen, zwischen denen eine Vakuumisolierung angeordnet ist. Das supraleitfähige Kabel hat mindestens einen supraleitfähigen Leiter. Es kann aber auch zwei oder drei gegeneinander isolierte supraleitfähige Leiter haben, die mit Vorteil koaxial zueinander angeordnet sind. Das supraleitfähige Kabel kann auch einen elektrisch leitfähigen Schirm aufweisen.

In der folgenden Beschreibung wird der Einfachheit halber ein Kabel mit nur einem supraleitfähigen Leiter berücksichtigt. Wandungen des Kryostats und des Endenabschlusses sind durch nur eine Linie dargestellt.

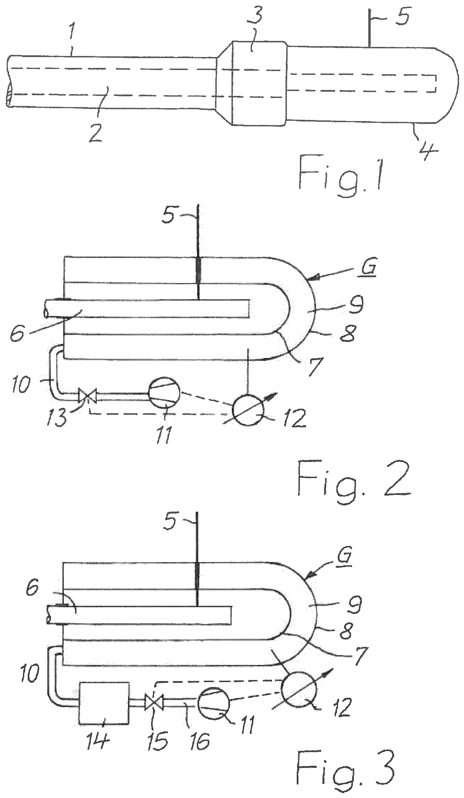

In Fig. 1 ist schematisch ein Kryostat 1 dargestellt, der ein gestrichelt eingezeichnetes supraleitfähiges Kabel 2 umschließt. Der Kryostat 1 ist durch eine zu demselben gehörende Erweiterung 3 abgeschlossen, an welcher ein Endenabschluß 4 befestigt ist, dessen genauerer Aufbau aus den Fig. 2 und 3 hervorgeht. Aus dem Endenabschluß 4 ragt eine Durchführung 5 heraus, welche dem elektrischen Anschluß des supraleitfähigen Leiters 6 (Fig. 2 und 3) des Kabels 1 dient.

Der von allen umgebenden Schichten des Kabels 1 befreite supraleitfähige Leiter 6 ist bis in den Endenabschluß 4 hineingeführt. Er wird in demselben vom Kühlmittel, beispielsweise von unter Druck stehendem, flüssigem Stickstoff, umspült, das während des Betriebes der Übertragungsstrecke durch den Kryostat geleitet wird.

Der Endenabschluß 4 weist ein Gehäuse G auf, das aus zwei Wandungen 7 und 8 besteht, welche durch einen Zwischenraum 9 voneinander getrennt sind. Sie können entsprechend der Darstellung in den Fig. 2 und 3 vorzugsweise parallel zueinander verlaufen. Die Wandungen 7 und 8 bestehen aus Isoliermaterial, und zwar vorzugsweise aus glasfaserverstärktem Kunststoff. Sie sind abgedichtet mit der Erweiterung 3 des Kryostats 1 verbunden. Das Kühlmittel befindet sich in dem von der inneren Wandung 7 des Endenabschlusses 4 umschlossenen Raum. Die Durchführung 5 ist an den Leiter 6 angeschlossen. Sie durchdringt beide Wandungen 7 und 8 des Endenabschlusses 4.

Im Zwischenraum 9 zwischen den beiden Wandungen 7 und 8 des Gehäuses G ist eine Gas enthaltende Isolierung angeordnet, die auch zum großen Teil aus einem Festkörper bzw. aus Festkörpern bestehen kann. Sie hat auch gute elektrisch isolierende Eigenschaften. Die Isolierung kann dementsprechend beispielsweise aus einem aufgeschäumten Isoliermaterial oder aus einer Vielzahl von Kunststoffteilen oder aus anderen elektrisch isolierenden Materialien, wie beispielsweise Glas, bestehen, die beispielsweise als Kugeln ausgeführt sind.

Im Zwischenraum 9 des Gehäuses G ist ein Druck eingestellt, der zwischen 10⁻⁹ mbar und 1000 mbar liegt. Es wird vorzugsweise ein Druck von 400 mbar erzeugt. Dazu ist an den Zwischenraum 9 eine Vakuumpumpe 11 angeschlossen, welche direkt oder entsprechend der zeichnerischen Darstellung auch über eine Rohrleitung 10 mit dem Zwischenraum 9 verbunden sein kann. Die Länge einer solchen Rohrleitung 10 ist variabel. Der Wert des Drucks wird während des Betriebes der Übertragungsstrecke mittels eines Druckmeßgeräts 12 gemessen, das gegebenenfalls ein Signal zum Einschalten und Wiederausschalten der Vakuumpumpe 11 abgibt. Wenn eine Rohrleitung 10 eingesetzt ist, dann kann zwischen dem Gehäuse G und der Vakuumpumpe 11 zusätzlich ein Ventil 13 angeordnet sein, das durch ein Signal des Druckmeßgeräts 12 geöffnet oder geschlossen wird, wenn die Vakuumpumpe 11 eingeschaltet oder ausgeschaltet wird. Mit der Anordnung nach Fig. 2 kann der Druck im Zwischenraum 9 des Gehäuses G in engen Grenzen auf einen vorgegebenen Wert eingestellt werden.

In bevorzugter Ausführungsform ist der Zwischenraum 9 des Gehäuses G mit einem ein zusätzliches Volumen darstellenden Behälter verbunden. Ein solcher Behälter kann direkt an den Zwischenraum angeschlossen sein. Er kann aber auch entsprechend der in Fig. 3 dargestellten Ausführungsform als separater Behälter 14 an das Gehäuse G des Endverschlusses 4 angeschlossen sein, und zwar zwischen Gehäuse G und Vakuumpumpe 11. Der Behälter 14 kann, so wie es in Fig. 3 dargestellt ist, über die Rohrleitung 10, aber auch direkt mit dem Zwischenraum 9 des Gehäuses G verbunden sein. Er umschließt ein Volumen, das groß ist im Verhältnis zu dem Volumen des im Zwischenraum 9 des Gehäuses G enthaltenen Gases. Das Volumen des Behälters 14 ist mit Vorteil mindestens um einen Faktor "10" größer als das Volumen des im Zwischenraum 9 enthaltenden Gases. Zwischenraum 9 und Behälter 14 sind also, beispielsweise durch die Rohrleitung 10, miteinander verbunden, so daß sich für das im Endenabschluß 4 vorhandene Gas ein wesentlich vergrößertes Volumen ergibt. Geringe Mengen von in das Gehäuse G des Endenabschlusses 4 eintretendem oder in dem Gehäuse G durch Ausgasung der Materialien entstehendem Gas wirken sich daher vermindert auf den im Zwischenraum 9 herrschenden Druck aus, so daß die Vakuumpumpe 11 nur noch in wesentlich vergrößerten Zeitabständen eingeschaltet und wieder ausgeschaltet werden muß. Auch bei dieser Ausführungsform des Endenabschlusses 4 kann ein Ventil 15 in einer Rohrleitung 16 angeordnet sein, die den Behälter 14 mit der Vakuumpumpe 11 verbindet.

Als Gas ist in dem Zwischenraum 9 des Gehäuses G des Endverschlusses 4 mit Vorteil ein Gas enthalten, das dem im Kryostat 1 der Übertragungsstrecke geführten Kühlmittel entspricht.

## Patentansprüche

1. Endenabschluß für ein supraleitfähiges elektrisches Kabel, das mindestens einen supraleitfähigen Leiter aufweist, das von einem rohrförmigen, zur Führung eines Kühlmittels dienenden Kryostat umgeben ist und das an seinem Ende von einem Kühlmittel enthaltenden Gehäuse umgeben ist, durch welches eine mit dem Leiter verbundene Durchführung für dessen elektrischen Anschluß nach außen geführt ist, **dadurch gekennzeichnet,**
- **daß** das Gehäuse (G) zwei durch einen Zwischenraum (9) voneinander getrennte, aus Isoliermaterial bestehende Wandungen (7,8) aufweist, in dessen Zwischenraum eine Gas enthaltende thermische Isolierung angebracht ist,
- **daß** der Druck in dem Zwischenraum (9) des Gehäuses (G) auf einen zwischen 10⁻⁹ mbar und 1000 mbar liegenden Wert eingestellt ist und
- **daß** an den Zwischenraum (9) ein Druckmeßgerät (12) und eine mit demselben verbundene Vakuumpumpe (11) angeschlossen sind, welche zur Einstellung des im Zwischenraum (9) des Gehäuses (G) herrschenden Drucks auf einen vorgegebenen Wert dient.

2. Endenabschluß nach Anspruch 1, **dadurch gekennzeichnet, daß** der Zwischenraum (9) des Gehäuses (G) mit einem Behälter (14) verbunden ist, dessen Volumen groß ist gegenüber dem Volumen des im Zwischenraum (9) enthaltenen Gases.

3. Endenabschluß nach Anspruch 2, **dadurch gekennzeichnet, daß** der Behälter (14) zwischen dem Gehäuse (G) und der Vakuumpumpe (11) angeordnet ist.

4. Endenabschluß nach Anspruch 2 oder 3, **dadurch gekennzeichnet, daß** das Volumen des Behälters (14) mindestens um den Faktor "10" größer als das Volumen des im Zwischenraum (9) des Gehäuses (G) enthaltenen Gases ist.

5. Endenabschluß nach Anspruch 1, **dadurch gekennzeichnet, daß** die Vakuumpumpe (11) über eine Rohrleitung (10) an den Zwischenraum (9) des Gehäuses (G) angeschlossen ist.

6. Endenabschluß nach Anspruch 5, **dadurch gekennzeichnet, daß** in der Rohrleitung (10) ein Ventil (13) angeordnet ist.

7. Endenabschluß nach einem der Ansprüche 2 bis 4, **dadurch gekennzeichnet, daß** der Behälter (14) und die Vakuumpumpe (11) über eine Rohrleitung (15) miteinander verbunden sind.

8. Endenabschluß nach Anspruch 7, **dadurch gekennzeichnet, daß** in der Rohrleitung (15) ein Ventil (16) angeordnet ist.

9. Endenabschluß nach einem der Ansprüche 1 bis 8, **dadurch gekennzeichnet, daß** das in dem Zwischenraum (9) des Gehäuses (G) enthaltene Gas dem im Kryostat (1) vorhandenen Kühlmittel entspricht.

## Claims

1. End termination for a super-conductive electrical cable comprising at least one super-conductive conductor surrounded by a tubular cryostat serving to conduct a coolant and surrounded at its end by a housing containing a coolant through which a duct connected to the conductor is guided outwards for its electrical connection,
**characterized in that**
- the housing (G) has two walls (7, 8) which are separated from one another by an interspace (9) and are made of insulating material and into which interspace a gas-containing thermal insulation is applied,
- the pressure in the interspace (9) of the housing (G) is set to a value lying between 10⁻⁹ mbar and 1000 mbar, and
- a pressure measuring device (12) and a vacuum pump (11) connected to the latter are connected to the interspace (9) and serve to adjust the pressure prevailing in the interspace (9) of the housing (G) to a predetermined value.

2. End termination according to claim 1,
**characterized in that**
the interspace (9) of the housing (G) is connected to a container (14) whose volume is large compared to the volume of the gas contained in the interspace (9).

3. End termination according to claim 2,
**characterized in that**
the container (14) is arranged between the housing (G) and the vacuum pump (11).

4. End termination according to claim 2 or 3,
**characterized in that**
the volume of the container (14) is at least 10 times greater than the volume of the gas contained in the interspace (9) of the housing (G).

5. End termination according to claim 1,
**characterized in that**
the vacuum pump (11) is connected via a pipeline (10) to the interspace (9) of the housing (G).

6. End termination according to claim 5,
**characterized in that**
a valve (13) is arranged in the pipeline (10).

7. End termination according to claim 2 to 4,
**characterized in that**
the container (14) and the vacuum pump (11) are connected to one another via a pipeline (15).

8. End termination according to claim 7,
**characterized in that**
a valve (16) is arranged in the pipeline (15).

9. End termination according to one of the claims 1 to 8,
**characterized in that**
the gas contained in the interspace (9) of the housing (G) corresponds to the coolant present in the cryostat (1).

## Revendications

1. Borne terminale pour un câble électrique supraconducteur, qui comprend au moins un conducteur supraconducteur, qui est entouré d'un cryostat tubulaire permettant le guidage d'un produit de refroidissement et qui est entouré, à son extrémité, par un boîtier contenant un produit de refroidissement, grâce auquel un passage relié avec le conducteur est guidé vers l'extérieur pour son raccordement électrique,
**caractérisée en ce que**
- le boîtier (G) comprend deux parois (7, 8) séparées entre elles par un espace intermédiaire (9) et constituées d'un matériau isolant, dans l'espace intermédiaire desquelles est montée une isolation thermique contenant un gaz,
- la pression dans l'espace intermédiaire (9) du boîtier (G) est réglée à une valeur entre 10⁻⁹ mbar et 1000 mbar et
- un appareil de mesure de pression (12) et une pompe à vide (11) reliée à celui-ci sont connectés à l'espace intermédiaire (9) et permettent de régler la pression régnant dans l'espace intermédiaire (9) du boîtier (G) à une valeur prédéterminée.

2. Borne terminale selon la revendication 1, **caractérisée en ce que** l'espace intermédiaire (9) du boîtier (G) est relié avec un récipient (14) dont le volume est important par rapport au volume du gaz contenu dans l'espace intermédiaire (9).

3. Borne terminale selon la revendication 2, **caractérisée en ce que** le récipient (14) est disposé entre le boîtier (G) et la pompe à vide (11).

4. Borne terminale selon la revendication 2 ou 3, **caractérisée en ce que** le volume du récipient (14) est au moins 10 fois plus important que le volume du gaz contenu dans l'espace intermédiaire (9) du boîtier (G).

5. Borne terminale selon la revendication 1, **caractérisée en ce que** la pompe à vide (11) est raccordée, par l'intermédiaire d'une conduite tubulaire (10), à l'espace intermédiaire (9) du boîtier (G).

6. Borne terminale selon la revendication 5, **caractérisée en ce que**, dans la conduite tubulaire (10) se trouve une soupape (13).

7. Borne terminale selon l'une des revendications 2 à 4, **caractérisée en ce que** le récipient (14) et la pompe à vide (11) sont reliés ensemble par l'intermédiaire d'une conduite tubulaire (15).

8. Borne terminale selon la revendication 7, **caractérisée en ce que**, dans la conduite tubulaire (15) se trouve une soupape (16).

9. Borne terminale selon l'une des revendications 1 à 8, **caractérisée en ce que** le gaz contenu dans l'espace intermédiaire (9) du boîtier (G) correspond au produit de refroidissement présent dans le cryostat (1).
